# EUROPÄISCHE PATENTANMELDUNG

(11) **EP 0 785 251 A2**
(43) Veröffentlichungstag der Anmeldung: **23.07.1997**
(21) Anmeldenummer: 97100702.6
(22) Anmeldetag: 17.01.1997
(51) Int. Cl.: C12G 3/04

(54) **Spirituosengrundlage, ihre Herstellung und ihre Verwendung zur Herstellung von Spirituosen**

(30) Priorität: 19.01.1996 CZ 17496
(71) Anmelder: OKA, s.r.o., 413 01 Roudnice nad Labem (CZ)
(72) Erfinder: Katzer, Jaroslav, Dipl.-Ing., 252 81 Petrov (CZ); Kucerova, Hana, Dipl.-Ing., 149 00 Praha 4 (CZ); Ondrousek, Stanislav, Dipl.-Ing. Dr., 102 00 Praha 10 (CZ); Spacek, Bohumil, Dipl.-Ing. Dr., 190 00 Praha 9 (CZ); Havlicek, Alexandr, Dr., 160 00 Praha 6 (CZ)
(74) Vertreter: Beetz & Partner Patentanwälte

(57) **Zusammenfassung**

Die Erfindung betrifft eine Spirituosengrundlage auf Emulsionsbasis, ihre Herstellung sowie ihre Verwendung zur Herstellung von Spirituosen. Die Spirituosengrundlage und entsprechende Spirituosen enthalten erfindungsgemäß als Emulsionskomponente Sojamilch bzw. getrocknete Sojamilch, vorzugsweise mit 15 bis 45 % Fett. Bei der Herstellung dieser Spirituosengrundlage wird vorzugsweise zunächst getrocknete Sojamilch mit Zucker und/oder Süßungsmitteln in trockenem Zustand in entsprechenden Mengen gemischt. Das Gemisch wird dann in einer kleinen Menge der insgesamt zuzusetzenden Wassermenge, vorzugsweise 20 bis 60 %, unter Rühren gelöst bzw. dispergiert. Nach dem Auflösen wird die gesamte erforderliche Ethanolmenge zugegeben, worauf nach Mischen mit Wasser auf das erforderliche Endvolumen aufgefüllt wird.

## Beschreibung

Die Erfindung betrifft eine neuartige Spirituosengrundlage, ihre Herstellung sowie ihre Verwendung zur Herstellung von neuartigen Spirituosen und insbesondere Likören.

Spirituosengrundlagen auf Emulsionsbasis und daraus hergestellte Spirituosen bzw. Liköre sind seit langem bekannt. Die Emulsionskomponente solcher Spirituosen beruht in den meisten Fällen entweder auf Milchprodukten, z.B. Sahne und Sahneprodukten, oder wird aus Ei oder Eiprodukten hergestellt (Eierliköre).

Derartige Spirituosen werden herkömmlicherweise durch Mischen einer Alkoholkomponente mit einer Emulsionskomponente hergestellt. Die Grundlage solcher Spirituosen ist im Fall von Milchprodukten eine speziell aufbereitete Kuhmilch, Sahne oder ein anderes Milchfette und/oder Milchproteine enthaltendes Produkt. Derartige Spirituosengrundlagen werden zumeist bereits in mit dem erforderlichen Alkoholanteil gemischter Form mit auf einen gewünschten Wert eingestelltem pH-Wert in den Handel gebracht. Die Herstellung derartiger Milchproduke ist relativ aufwendig; von ihrer Qualität hängt die Stabilität der entsprechenden Spirituosengrundlage ab. Ein besonderes Problem besteht bei diesem Stand der Technik darin, daß Zusammensetzung und Acidität der eingesetzten Milch bzw. Milchrohstoffe Schwankungen unterliegen. Probleme hinsichtlich der Stabilität der Spirituosengrundlage bzw. daraus hergestellter Spirituosen und insbesondere Liköre treten besonders dann auf, wenn die Spirituosengrundlage bzw. das Spirituose-Endprodukt relativ sauer sein sollen.

Aus diesen Gründen sind die Gestehungskosten entsprechender Spirituosengrundlagen und daraus hergestellter bzw. darauf beruhender Spirituosen, die ausreichende Stabilität aufweisen, relativ hoch.

Ein weiterer Nachteil von Spirituosengrundlagen und Spirituosen auf der Basis wäßriger Emulsionen ist darin zu sehen, daß der über die eingesetzten Milchprodukte eingeführte Lactosegehalt zu Unverträglichkeitsreaktionen aufgrund von Lactoseintoleranz wie auch zu allergischen Reaktionen führen kann, da ein immer größerer Anteil der Bevölkerung zu allergischen Reaktionen neigt.

Der Erfindung liegt die Aufgabe zugrunde, eine Spirituosengrundlage, ihre Herstellung sowie daraus hergestellte Spirituosen und insbesondere Liköre auf Emulsionsbasis anzugeben, bei denen die oben erläuterten Nachteile des Standes der Technik vermieden sind. Insbesondere sollen Spirituosengrundlagen und entsprechende Spirituosen angegeben werden, die hohe Stabilität besitzen, frei von Milchprodukten oder Eiprodukten sind und unter niedrigen Gestehungskosten hergestellt werden können.

Die Aufgabe wird gemäß den unabhängigen Ansprüchen gelöst. Die abhängigen Ansprche betreffen vorteilhafte Ausführungsformen der Erfindungskonzeption.

Die erfindungsgemäße Spirituosengrundlage auf der Basis einer wasserhaltigen Emulsion enthält eine dem jeweiligen Spirituosentyp entsprechende Alkoholmenge und ggfs. weitere Komponenten und ist dadurch gekennzeichnet, daß die Emulsionskomponente Sojamilch ist oder aus getrockneter Sojamilch hergestellt ist.

Sojamilch stellt sowohl in flüssiger als auch in getrockneter Form ein übliches Handelsprodukt dar, das dem Fachmann geläufig ist.

Im Fall der Verwendung von getrockneter Sojamilch wird die entsprechende Emulsion durch Rekonstituieren mit Wasser oder wäßrigen Lösungen hergestellt. Die erfindungsgemäße Spirituosengrundlage enthält neben dem Alkohol vorzugsweise Zucker und/oder ein oder mehrere Süßungsmittel.

Nach einer vorteilhaften Ausführungsform enthält die erfindungsgemäße Spirituosengrundlage Sojamilch bzw. rekonstituierte Sojamilch in einer Menge von 50 bis 300 g, bezogen auf die Trockenmasse der Sojamilch, pro Liter fertige Spirituosengrundlage. Unter der Trockenmasse der Sojamilch wird dabei die Masse an getrockneter Sojamilch verstanden.

Vorteilhaft wird eine Sojamilch eingesetzt, die einen Fettgehalt von 15 bis 45 %, bezogen auf die Trockenmasse, aufweist.

Die erfindungsgemäße Spirituosengrundlage weist vorzugsweise einen Ethanolgehalt von 100 bis 300 ml, bezogen auf 96 % vol. Ethanol, pro Liter fertige Spirituosengrundlage auf.

Der Gehalt an Zucker, insbesondere Saccharose, liegt vorteilhaft im Bereich von 10 bis 350 g pro Liter fertige Spirituosengrundlage.

Im Hinblick auf die Verwendung der erfindungsgemäßen Spirituosengrundlage zu diätetischen Zwecken, zur Herstellung kalorienreduzierter Spirituosen und insbesondere zur Verwendung solcher Erzeugnisse für Diabetiker wird der Zucker vorzugsweise zum Teil oder vollständig durch ein oder mehrere Süßungsmittel ersetzt. Unter Süßungsmitteln werden im Sinne der üblichen Terminologie Zuckeraustauschstoffe sowie Süßstoffe verstanden. Im Rahmen der Erfindung eignen sich alle üblichen Zuckeraustauschstoffe und insbesondere Mannit, Xylit, Sorbit, Isomalt oder Palatinit, Maltit, Maltit-Sirup, Isomaltit, Lactit, Leucrose, Fructooligosaccharide, Glucane, Polyglucose, insbesondere Polyglucose PL-3, sowie Glucose-Sirup. Diese Zuckeraustauschstoffe sind dem Fachmann geläufig und stellen übliche Handelsprodukte dar.

Im Rahmen der Erfindung können ferner alle üblichen Süßstoffe als Süßungsmittel eingesetzt werden. Derartige Süßstoffe sind dem Fachmann ebenfalls geläufig. Besonders geeignete Süßstoffe sind Cyclamat, Aspartam, Superaspartam, Dulcin, Saccharin, Naringindihydrochalkon, Neohesperidindihydrochalkon, Acesulfam-K, Suosan, Sucralose, Steviosid, Monellin, Thaumatin, Osladin, Hernandulcin, Miraculin, Phyllodulcin, Pentadien und Glycyrrhicin.

Die erfindungsgemäße Spirituosengrundlage kann ferner vorteilhaft ein Verdickungsmittel enthalten, insbesondere in den Fällen, in denen der Zucker teilweise oder ganz durch Süßungsmittel und insbesondere Süßstoffe ersetzt ist. Geeignete Verdickungsmittel sind dem Fachmann auf dem Gebiet der Lebensmittelchemie ebenfalls geläufig. Geeignete Verdickungsmittel sind beispielsweise Zucker, Agar-Agar, Carrageen, Tragant, Pektine, Alginate, Polyosen, Guar-Mehl, Johannisbrotbaumkernmehl, Stärke, Dextrine, Gelatine und Casein. Die Verdickungsmittel werden vorteilhaft in einer Menge von bis zu 5 g pro Liter, bezogen auf die fertige Spirituosengrundlage, eingesetzt.

Nach einer vorteilhaften Ausführungsform enthält die Spirituosengrundlage gemäß der Erfindung eine oder mehrere auf dem Gebiet der Lebensmittelchemie zulässige Säuren, insbesondere organische Säuren, wie beispielsweise Essigsäure, Citronensäure, Äpfelsäure, Weinsäure, insbesondere L(+)-Weinsäure, und Milchsäure. Im Rahmen der Erfindung eignen sich ferner auch andere Säuren und besonders Fruchtsäuren als Additive für die Spirituosengrundlage. Die Säuren sind vorteilhaft in einer Menge von bis zu 5 g pro Liter, bezogen auf die fertige Spirituosengrundlage, enthalten.

Das erfindungsgemäße Verfahren zur Herstellung der Spirituosengrundlage besteht prinzipiell im Vermischen von Sojamilch oder getrockneter Sojamilch mit Wasser und Alkohol und ggfs. weiteren Zusätzen, wobei die Mengen der Komponenten so gewählt werden, daß die entsprechenden angestrebten Endkonzentrationen der betreffenden Komponenten im fertigen Produkt erzielt werden. Das Vermischen der Sojamilch bzw. der getrockneten Sojamilch mit Wasser und den übrigen Komponenten erfolgt in der Regel durch einfaches Rühren und erforderlichenfalls durch Homogenisierung unter Verwendung üblicher Homogenisiereinrichtungen.

Eine bevorzugte Ausführungsform des erfindungsgemäßen Verfahrens zur Herstellung der Spirituosengrundlage umfaßt folgende Schritte:
(A) Mischen von getrockneter Sojamilch mit Zucker und/oder einem oder mehreren Süßungsmitteln in der angestrebten Endkonzentration entsprechenden Mengen in trockenem Zustand,
(B) Lösen bzw. Dispergieren des erhaltenen Gemisches in einer Teilmenge der insgesamt zuzusetzenden Gesamtmenge an Wasser, vorzugsweise in 20 bis 60 % der Gesamtmenge an Wasser, erforderlichenfalls unter Rühren bzw. Homogenisieren,
(C) Zugabe und Einmischen der gesamten erforderlichen Menge an Ethanol
   und
(D) Auffüllen der erhaltenen Emulsion mit Wasser auf das erforderliche Endvolumen.

Die Zugabe weiterer Additive bzw. Komponenten, wie Aromastoffe, Extrakte, bevorzugt pflanzliche Extrakte, Fruchtauszüge oder Fruchtdestillate, etherische Öle, Essenzen, Fruchtether und Fruchtester, etc., kann in jedem der obigen Schritte A bis D erfolgen. Bei Zugabe sämtlicher für die resultierende Spirituose erforderlicher Zusatzstoffe entspricht das oben definierte Verfahren der Herstellung der Spirituose als Endprodukt.

Verdickungsmittel und/oder Säuren werden vorteilhaft in Schritt A zugesetzt.

Die erfindungsgemäße Spirituosengrundlage ist als solche ein handelsfähiges Produkt, das dann durch geeignete Zusätze zu entsprechenden Spirituosen weiterverarbeitet werden kann.

Spirituosen auf der Basis einer Wasser und Ethanol enthaltenden Emulsion, die Sojamilch enthalten oder unter Verwendung von getrockneter Sojamilch hergestellt sind oder unter Verwendung der erfindungsgemäßen Spirituosengrundlage erzeugt sind, sind ebenfalls Gegenstand der vorliegenden Erfindung.

Solche Spirituosen sind vorzugsweise Liköre.

Die Erfindungskonzeption umfaßt demgemäß auch die Verwendung von Sojamilch in flüssigem oder getrocknetem Zustand in sowie zur Herstellung von Spirituosengrundlagen und Spirituosen, insbesondere Likören.

Aus der erfindungsgemäßen Spirituosengrundlage hergestellte Spirituosen und insbesondere Liköre sind organoleptisch und besonders hinsichtlich ihres Geschmacks mit Spirituosen auf der Basis von Milch und Milchprodukten sowie mit Spirituosen auf der Basis von Ei und Eiprodukten vergleichbar. Der durch die Sojamilch hervorgerufene geringfügige Geschmacksunterschied gegenüber den genannten herkömmlichen Spirituosen stellt einen durchaus positiven Aspekt der Erfindung dar. Im übrigen tritt dieser Geschmacksunterschied besonders bei Spirituosen und Likören mit höherem Aromatisierungsgrad praktisch nicht mehr in Erscheinung.

Die erfindungsgemäße Spirituosengrundlage ist aufgrund ihrer Zusammensetzung grundsätzlich lactosefrei und daher für Allergiker und lactoseintolerante Personen diesbezüglich völlig problemlos.

Ein entscheidender Vorteil liegt in der einfachen und billigen Herstellung der Spirituosengrundlage und entsprechender Spirituosen, ohne daß hierbei ein Risiko der Instabilität der Spirituosengrundlage und daraus hergestellter Produkte besteht, und zwar auch nicht in Fällen von Produkten mit höherer Acidität.

Bei Verwendung von Süßungsmitteln und insbesondere Süßstoffen wird das Süßungsmittel in der gleichen Verfahrensstufe zugegeben, in der Zucker zugegeben würde.

Die zugesetzte Menge an Süßungsmitteln hängt vom jeweiligen Süßungsgrad der eingesetzten Produkte und der angestrebten Süßwirkung ab. Die Auswahl entsprechender Zusatzmengen ist dem Fachmann geläufig.

Die Erfindung wird im folgenden anhand von Ausführungsbeispielen näher erläutert, deren Angaben lediglich beispielhaft sind.

Die Beispiele beziehen sich auf die Herstellung erfindungsgemäßer Spirituosengrundlagen und entsprechender Spirituosen.

### Beispiel 1

| Spirituosengrundlage: | |
|---|---|
| Getrocknete Sojamilch, Fettgehalt 31 % | 140 g |
| Zucker | 250 g |
| Ethanol 96 % vol. | 177 ml |
| Wasser | auf 1000 ml. |

### Beispiel 2

| Spirituosengrundlage: | |
|---|---|
| Getrocknete Sojamilch, Fettgehalt 40 % | 200 g |
| Zucker | 200 g |
| Citronensäure | 1 g |
| Ethanol 96 % vol. | 200 ml |
| Wasser | auf 1000 ml. |

### Beispiel 3

| Spirituosengrundlage: | |
|---|---|
| Getrocknete Sojamilch, Fettgehalt 31 % | 150 g |
| Gemisch Aspartam/Acesulfam (3:2) | 0,8 g |
| Xanthan | 1,5 g |
| Ethanol 96 % vol. | 150 ml |
| Wasser | auf 100 ml. |

### Beispiel 4

| Likör: | |
|---|---|
| Nußaroma | 2 ml |
| Rumessenz | 0,25 ml |
| Spirituosengrundlage nach Beispiel 1 | auf 1000 ml. |

### Beispiel 5

| Likör: | |
|---|---|
| Brandy 40%ig | 50 ml |
| Brandybonifikator | 1 ml |
| Whiskyaroma | 1 ml |
| 10 %ige Zuckercouleurlösung in Alkohol | 2,5 ml |
| Spirituosengrundlage nach Beispiel 2 | auf 1000 ml. |

### Beispiel 6

### Herstellung einer Spirituosengrundlage:

140 g getrocknete Sojamilch mit einem Fettgehalt von 31 % werden mit 250 g Rübenzucker in trockenem Zustand gemischt. Dieses Gemisch wird unter beständigem Rühren in 500 ml Wasser dispergiert; danach werden 170 ml Ethanol 96 % vol. zugemischt. Anschließend wird das Gemisch mit Wasser auf ein Endvolumen von 1000 ml aufgefüllt.

## Patentansprüche

1. Spirituosengrundlage auf der Basis einer wasserhaltigen Emulsion,
dadurch gekennzeichnet, daß die Emulsionskomponente Sojamilch ist oder aus getrockneter Sojamilch hergestellt ist.

2. Spirituosengrundlage nach Anspruch 1, dadurch gekennzeichnet, daß sie ferner Ethanol sowie Zucker und/oder ein oder mehrere Süßungsmittel enthält.

3. Spirituosengrundlage nach Anspruch 1 oder 2, dadurch gekennzeichnet, daß sie Sojamilch in einer Menge von 50 bis 300 g, bezogen auf die Trockenmasse, pro Liter enthält.

4. Spirituosengrundlage nach einem oder mehreren der Ansprüche 1 bis 3, dadurch gekennzeichnet, daß sie Ethanol in einer Menge von 100 bis 300 ml, bezogen auf 96 % vol. Ethanol, pro Liter enthält.

5. Spirituosengrundlage nach einem oder mehreren der Ansprüche 1 bis 4, dadurch gekennzeichnet, daß sie Zucker in einer Menge von 10 bis 350 g pro Liter enthält.

6. Spirituosengrundlage nach einem oder mehreren der Ansprüche 2 bis 5, dadurch gekennzeichnet, daß sie als Süßungsmittel einen oder mehrere Zuckeraustauschstoffe enthält.

7. Spirituosengrundlage nach Anspruch 6, dadurch gekennzeichnet, daß der Zuckeraustauschstoff unter Mannit, Xylit, Sorbit, Isomalt oder Palatinit, Maltit, Maltit-Sirup, Isomaltit, Lactit, Leucrose, Fructooligosacchariden, Glucanen, Polyglucose, insbesondere Polyglucose PL-3, und Glucose-Sirup ausgewählt ist.

8. Spirituosengrundlage nach einem oder mehreren der Ansprüche 2 bis 7, dadurch gekennzeichnet, daß sie als Süßungsmittel einen oder mehrere Süßstoffe enthält.

9. Spirituosengrundlage nach Anspruch 8, dadurch gekennzeichnet, daß der Süßstoff unter Cyclamat, Aspartam, Superaspartam, Dulcin, Saccharin, Naringindihydrochalkon, Neohesperidindihydrochalkon, Acesulfam-K, Suosan, Sucralose, Steviosid, Monellin, Thaumatin, Osladin, Hernanduclin, Miraculin, Phyllodulcin, Pentadien und Glycyrrhicin ausgewählt ist.

10. Spirituosengrundlage nach einem oder mehreren der Ansprüche 1 bis 9, dadurch gekennzeichnet, daß sie ein Verdickungsmittel enthält.

11. Spirituosengrundlage nach Anspruch 10, dadurch gekennzeichnet, daß das Verdickungsmittel unter Zuckern, Agar-Agar, Carrageen, Tragant, Pektinen, Alginaten, Polyosen, Guar-Mehl, Johannisbrotbaumkernmehl, Stärke, Dextrinen, Gelatine und Casein ausgewählt ist.

12. Spirituosengrundlage nach Anspruch 10 und/oder 11, dadurch gekennzeichnet, daß das Verdickungsmittel in einer Menge von bis zu 5 g pro Liter enthalten ist.

13. Spirituosengrundlage nach einem oder mehreren der Ansprüche 1 bis 12, dadurch gekennzeichnet, daß sie eine oder mehrere für Nahrungs- und Genußmittel zugelassene Säuren enthält.

14. Spirituosengrundlage nach Anspruch 13, dadurch gekennzeichnet, daß die Säure unter Essigsäure, Citronensäure, Apfelsäure, Weinsäure und Milchsäure ausgewählt ist.

15. Spirituosengrundlage nach Anspruch 13 und/oder 14, dadurch gekennzeichnet, daß die Säure in einer Menge von bis zu 5 g pro Liter enthalten ist.

16. Spirituosengrundlage nach einem oder mehreren der Ansprüche 1 bis 15, dadurch gekennzeichnet, daß die Sojamilch einen Fettgehalt von 15 bis 45 %, bezogen auf die Trockenmasse, aufweist.

17. Verfahren zur Herstellung der Spirituosengrundlage nach den Ansprüchen 1 bis 16,
gekennzeichnet durch Vermischen von Sojamilch oder getrockneter Sojamilch mit Wasser und ggfs. weiteren Zusätzen, jeweils in einer der angestrebten Konzentration entsprechenden Menge, ggfs. unter Homogenisierung.

18. Verfahren nach Anspruch 17, gekennzeichnet durch
(A) Mischen von getrockneter Sojamilch mit Zucker und/oder einem oder mehreren Süßungsmitteln in der angestrebten Endkonzentration entsprechenden Mengen in trockenem Zustand,
(B) Lösen bzw. Dispergieren des erhaltenen Gemisches in einer Teilmenge der insgesamt zuzusetzenden Gesamtmenge an Wasser, vorzugsweise in 20 bis 60 % der Gesamtmenge an Wasser, erforderlichenfalls unter Rühren bzw. Homogenisieren,
(C) Zugabe und Einmischen der gesamten erforderlichen Menge an Ethanol
und
(D) Auffüllen der erhaltenen Emulsion mit Wasser auf das erforderliche Endvolumen.

19. Verfahren nach Anspruch 18, dadurch gekennzeichnet, daß in Schritt A Verdickungsmittel und/oder Säuren zugesetzt werden.

20. Spirituosen auf der Basis einer Wasser und Ethanol enthaltenden Emulsion, dadurch gekennzeichnet, daß sie Sojamilch enthalten oder unter Verwendung von getrockneter Sojamilch hergestellt sind.

21. Spirituosen nach Anspruch 20, gekennzeichnet durch eine Spirituosengrundlage nach einem der Ansprüche 1 bis 16.

22. Spirituosen nach Anspruch 20 und/oder 21, dadurch gekennzeichnet, daß sie Liköre sind.

23. Verfahren zur Herstellung der Spirituosen nach den Ansprüchen 20 bis 22, gekennzeichnet durch Zusatz der jeweiligen weiteren Additive zu einer Spirituosengrundlage nach einem der Ansprüche 1 bis 16.

24. Verfahren zur Herstellung der Spirituosen nach den Ansprüchen 20 bis 22,
gekennzeichnet durch
(A) Mischen von getrockneter Sojamilch mit Zucker und/oder einem oder mehreren Süßungsmitteln in der angestrebten Endkonzentration entsprechenden Mengen in trockenem Zustand,
(B) Lösen bzw. Dispergieren des erhaltenen Gemisches in einer Teilmenge der insgesamt zuzusetzenden Gesamtmenge an Wasser, vorzugsweise in 20 bis 60 % der Gesamtmenge an Wasser, erforderlichenfalls unter Rühren bzw. Homogenisieren,
(C) Zugabe und Einmischen der gesamten erforderlichen Menge an Ethanol
und
(D) Auffüllen der erhaltenen Emulsion mit Wasser auf das erforderliche Endvolumen,
wobei die weiteren Additive in einem oder mehreren der Schritte A bis D zugegeben werden.

25. Verwendung von Sojamilch in flüssigem oder getrocknetem Zustand in sowie zur Herstellung von Spirituosengrundlagen und Spirituosen, insbesondere Likören.
